# EUROPEAN PATENT APPLICATION

(11) **EP 4 667 984 A1**
(43) Date of publication of application: **24.12.2025**
(21) Application number: 24756685.4
(22) Date of filing: 01.02.2024
(51) Int. Cl.: G02B 6/02

(54) **MULTICORE FIBER**

(30) Priority: 14.02.2023 JP 2023021006
(71) Applicant: Fujikura Ltd., Tokyo 135-8512 (JP)
(72) Inventor: KAJIKAWA, Shota, Sakura-shi, Chiba 285-8550 (JP)
(74) Representative: Hoffmann Eitle
(86) International application number: PCT/JP2024/003354
(87) International publication number: WO 2024/171835

(57) **Abstract**

A multicore fiber (1) includes a plurality of cores (10) and a cladding (20), in which an outer circumferential surface of the cladding (20) includes a first outer circumferential surface (21) that is a part in a circumferential direction and a second outer circumferential surface (22) that is another part in the circumferential direction, and the first outer circumferential surface (21) bulges outward with a curvature radius larger than that of the second outer circumferential surface (22).

## Description

### Technical Field

The present invention relates to a multicore fiber.

### Background Art

With the spread of optical fiber communication systems in recent years, the information volume transmitted by optical fibers has dramatically increased. In view of such a background, multicore fibers, in which outer circumferences of a plurality of cores are surrounded by a single cladding, are used. Since the multicore fibers are capable of transmitting a plurality of signals by light propagating through each of the plurality of cores, the transmission capacity per optical fiber is increased.

When a multicore fiber is used for long-distance optical signal transmission, another multicore fiber may be connected. In this case, from the viewpoint of reducing the loss of light at a connection portion of the multicore fiber, it is desirable to increase the arrangement accuracy of each core of the multicore fiber.

Patent Literature 1 set out below discloses a multicore fiber in which an outer shape of a cladding is made non-circular to achieve favorable optical coupling. Patent Literature 1 discloses, for example, a multicore fiber including a cladding having what is called a D-type outer shape in which a part of the outer circumferential surface is formed in a planar shape.

[Patent Literature 1] JP 2010-286548 A

### Summary of Invention

In a case where the multicore fiber including the cladding having the D-type outer shape is aligned in a rotational direction, the alignment may be carried out by side-view alignment in which a side surface of the cladding is irradiated with light and positions of cores and the like are observed. However, in the case of performing the side-view alignment using the multicore fiber including the cladding having the D-type outer shape, there is a rotational position where spherical aberration is large and the side-view alignment is difficult to perform. Examples of such a rotational position include a position where light is made incident from a planar portion of the outer circumferential surface of the cladding. For this reason, it may be difficult to carry out the alignment in some cases.

In view of the above, the present invention aims to provide a multicore fiber that may be easily aligned.

A first aspect of the present invention to solve the problem described above is directed to a multicore fiber including a plurality of cores and a cladding that surrounds the cores, in which an outer circumferential surface of the cladding includes a first outer circumferential surface that is a part in a circumferential direction and a second outer circumferential surface that is another part in the circumferential direction, and at least a part of the first outer circumferential surface bulges outside the cladding with a curvature radius larger than that of the second outer circumferential surface.

Even in a case where light is incident from the side of the first outer circumferential surface at the time of performing the side-view alignment on such a multicore fiber, the spherical aberration may be suppressed as compared with a case where light is incident from the planar portion of the outer circumferential surface of the D-type cladding described above. Thus, according to the multicore fiber according to the present invention, the alignment may be easily performed.

Furthermore, a second aspect of the present invention is directed to the multicore fiber according to the first aspect, in which the plurality of cores are arranged on an outer circumferential side of the cladding, and at least one of individual portions of the outer circumferential surface facing the plurality of cores is the first outer circumferential surface.

A portion of the outer circumferential surface facing a core indicates a portion of the outer circumferential surface closest to the core. Thus, the distance between the core arranged on the outer circumferential side and the first outer circumferential surface facing the core is smaller than the distance between the core and the second outer circumferential surface in the case where the portion of the outer circumferential surface facing the core arranged on the outer circumferential side is the second outer circumferential surface. Thus, unrequired light of a higher-order mode propagating through the core facing the first outer circumferential surface may be attenuated by the influence of the first outer circumferential surface. The unrequired light of the higher-order mode is, for example, light not used for communication.

Furthermore, a third aspect of the present invention is directed to the multicore fiber according to the second aspect, in which each of the portions is the first outer circumferential surface.

In this case, the unrequired light of the higher-order mode propagating through the individual cores arranged on the outer circumferential side may be attenuated by the influence of the first outer circumferential surface.

Furthermore, a fourth aspect of the present invention is directed to the multicore fiber according to any one of the first to third aspects, in which the outer circumferential surface of the cladding has a non-rotationally symmetric shape.

In this case, rough alignment of the multicore fiber may be carried out such that the rotational direction of the cladding is a specific direction on the basis of the outer shape of the cladding.

Furthermore, a fifth aspect of the present invention is directed to the multicore fiber according to any one of the first to fourth aspects, in which the curvature radius of the first outer circumferential surface is 1.5 times or more and 20 times or less the curvature radius of the second outer circumferential surface.

With the ratio between the curvature radius of the first outer circumferential surface and the curvature radius of the second outer circumferential surface having such a relationship, the rough alignment based on the outer circumferential surface of the cladding may be carried out more easily, and the spherical aberration at the time of performing the side-view alignment may be suppressed.

As described above, according to the present invention, a multicore fiber that may be easily aligned is provided.

### Brief Description of Drawings

[FIG. 1] FIG. 1 is a diagram illustrating a cross section perpendicular to a longitudinal direction of a multicore fiber according to a first embodiment of the present invention.
[FIG. 2] FIG. 2 is a diagram illustrating a spherical aberration in a case where light is made incident on a second outer circumferential surface from a direction perpendicular to the longitudinal direction of the multicore fiber in FIG. 1 and the light is emitted from a first outer circumferential surface.
[FIG. 3] FIG. 3 is a diagram illustrating a spherical aberration in a case where light is made incident on the first outer circumferential surface from the direction perpendicular to the longitudinal direction of the multicore fiber in FIG. 1 and the light is emitted from the second outer circumferential surface.
[FIG. 4] FIG. 4 is a diagram illustrating a cross section perpendicular to a longitudinal direction of a multicore fiber according to a second embodiment of the present invention.
[FIG. 5] FIG. 5 is a diagram illustrating a cross section perpendicular to a longitudinal direction of a multicore fiber according to a third embodiment of the present invention.

### Description of Embodiments

Hereinafter, preferred embodiments of a multicore fiber according to the present invention will be described in detail with reference to the drawings. The embodiments to be exemplified below are for the purpose of facilitating understanding of the present invention, and are not for limiting interpretation of the present invention. The present invention may be modified and improved from the embodiments in the scope of the claims. Note that, for easy understanding, scales in the individual drawings may be different from scales to be described in the following descriptions.

### (First Embodiment)

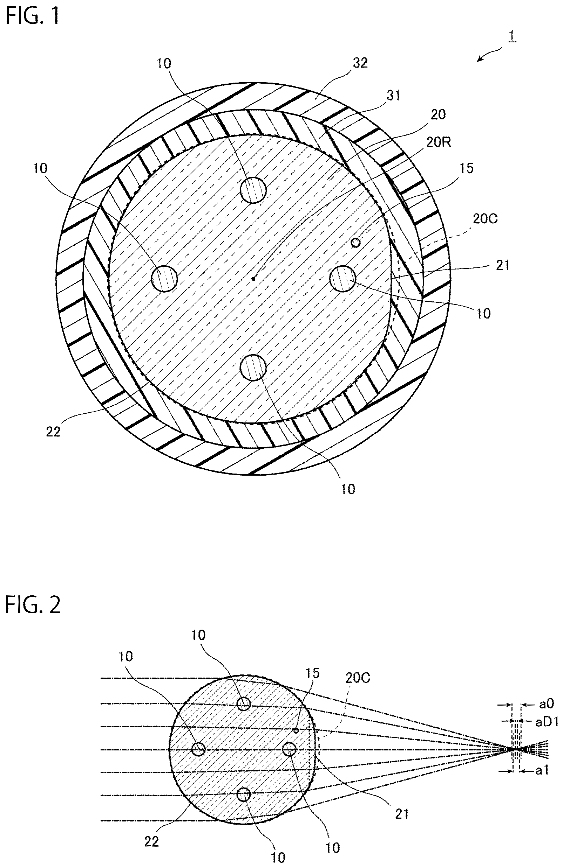

FIG. 1 is a diagram illustrating a cross section perpendicular to a longitudinal direction of a multicore fiber according to the present embodiment. A multicore fiber 1 according to the present embodiment includes a plurality of cores 10, a marker 15, a cladding 20 surrounding outer circumferential surfaces of the individual cores 10 and marker 15 with no gap, an inner coating layer 31 coating the outer circumferential surface of the cladding 20, and an outer coating layer 32 coating the outer circumferential surface of the inner coating layer 31. In the example of FIG. 1, an exemplary case is illustrated in which four cores 10 are provided.

In the multicore fiber 1 according to the present embodiment, the individual cores 10 are arranged on a circumference centered on a reference position 20R, which is substantially the center of the cladding 20. In the present embodiment, each of the cores 10 is arranged on the outermost circumferential side of the cladding 20. In the multicore fiber 1 according to the present embodiment, distances among the individual cores 10 are equal to each other, and the individual cores 10 are arranged at positions that are approximately four times rotationally symmetric around the reference position 20R. A diameter of the core 10 is, for example, 4 µm or more and 14 µm or less.

The marker 15 is arranged outside the circumference on which the individual cores 10 are arranged. A refractive index of the marker 15 may be higher or lower than that of the cladding 20 as long as the refractive index is different from that of the cladding 20.

The refractive index of each of the cores 10 is higher than the refractive index of the cladding 20, and a relative refractive index difference of each of the cores 10 to the cladding 20 is, for example, 0.2% or more and 2.0% or less. Such a core 10 is made of, for example, silica glass to which a dopant such as germanium having a high refractive index is added, and the cladding 20 is made of, for example, silica glass to which no dopant is added. Furthermore, the core 10 may be made of silica glass to which no dopant is added, and the cladding 20 may be made of silica glass to which a dopant such as fluorine having a low refractive index is added. The marker 15 is made of silica glass having a refractive index different from that of the cladding 20.

The cladding 20 has a non-circular outer shape, and has a first outer circumferential surface 21 that is a part in the circumferential direction, and a second outer circumferential surface 22 that is another part in the circumferential direction. In the present embodiment, one portion of the portions of the outer circumferential surface of the cladding 20 facing the individual cores 10 serves as the first outer circumferential surface 21, and other portions of the outer circumferential surface of the cladding 20 serve as the second outer circumferential surface 22. A portion of the outer circumferential surface facing a core 10 indicates a portion of the outer circumferential surface closest to the core 10. Thus, a distance between the core 10 facing the first outer circumferential surface 21 and the first outer circumferential surface 21 is smaller than a distance between the core 10 and the second outer circumferential surface 22. The second outer circumferential surface 22 overlaps a part of a predetermined circumference 20C centered on the reference position 20R of the cladding 20. Note that, from the viewpoint of visibility of the drawings, the circumference 20C indicated by a broken line and the second outer circumferential surface 22 are slightly displaced. The first outer circumferential surface 21 bulges outside the cladding 20 with a curvature radius larger than that of the second outer circumferential surface 22, and is connected to the second outer circumferential surface 22. Thus, the first outer circumferential surface 21 is positioned inside the circumference 20C described above.

In the embodiments, the length of the straight line connecting both ends of the first outer circumferential surface 21 is equal to or longer than the diameter of the core 10 facing the first outer circumferential surface 21. Furthermore, in the present embodiment, the core 10 facing the first outer circumferential surface 21 completely overlaps the first outer circumferential surface 21 when the first outer circumferential surface 21 is viewed along the direction perpendicular to the longitudinal direction of the multicore fiber 1.

As described above, since the first outer circumferential surface 21 is formed only in one location in the cladding 20 according to the present embodiment, the outer circumferential surface of the cladding 20 has a non-rotationally symmetric shape.

The curvature radius of the first outer circumferential surface 21 is preferably 1.5 times or more and 20 times or less the curvature radius of the second outer circumferential surface 22. As described above, when the curvature radius of the first outer circumferential surface is 1.5 times or more the curvature radius of the second outer circumferential surface, the outer circumferential surface of the cladding may be brought closer to a planar shape. Thus, such rough alignment based on the outer circumferential surface of the cladding 20 may be more easily performed. In addition, since the curvature radius of the first outer circumferential surface is 20 times or less the curvature radius of the second outer circumferential surface, a spherical aberration at a time of performing side-view alignment may be suppressed.

The inner coating layer 31 and the outer coating layer 32 are each made of a resin, such as an ultraviolet curable resin, and the inner coating layer 31 and the outer coating layer 32 are made of resins different from each other.

In order to manufacture the multicore fiber 1 including the cladding 20 having such a shape, for example, a part of an outer circumferential surface of a cladding rod, which is to be the cladding 20 of the base material of the multicore fiber 1, is cut. With the base material having such a cladding rod being subject to drawing to form the multicore fiber 1, the cut portion of the outer circumferential surface of the cladding rod serves as the first outer circumferential surface 21, and another portion serves as the second outer circumferential surface 22.

FIG. 2 is a diagram illustrating a spherical aberration in a case where light is made incident on the second outer circumferential surface 22 from a direction perpendicular to the longitudinal direction of the multicore fiber 1 and the light is emitted from the first outer circumferential surface 21. Note that, when light is transmitted through the multicore fiber 1 in this manner, the inner coating layer 31 and the outer coating layer 32 are peeled off. Since the first outer circumferential surface 21 is located on the light emission side in the case of FIG. 2, the multicore fiber 1 may be regarded as a biconvex lens close to a planar lens, and the light emitted from the first outer circumferential surface 21 has a spherical aberration of a size a1. Note that the planar lens is a lens in which a surface on which light is incident is formed in a convex shape and a surface from which the light is emitted is formed in a planar shape, and the biconvex lens is a lens in which both the surface on which the light is incident and the surface from which the light is emitted are formed in a convex shape. Furthermore, FIG. 2 illustrates magnitude a0 of the spherical aberration in a case where similar light is transmitted through a multicore fiber including circular cladding. The multicore fiber including the circular cladding may be regarded as a biconvex lens. As described above, by transmitting light through the multicore fiber 1 according to the present embodiment as described above, the spherical aberration may be made smaller than that in a case where light is transmitted through a multicore fiber including a circular cladding having a curvature radius of the second outer circumferential surface smaller than a spherical aberration of light in a case where the light is made incident on the circular outer circumferential surface having a curvature radius of the second outer circumferential surface from a direction perpendicular to the longitudinal direction of the circular cladding and the light is emitted from the circular outer circumferential surface. Since the spherical aberration of the light is made smaller as described above, the multicore fiber 1 may be more accurately aligned in a rotational direction.

Furthermore, FIG. 2 illustrates magnitude aD1 of the spherical aberration in a case where light is transmitted through a multicore fiber including what is called a D-type cladding, in which a portion corresponding to the first outer circumferential surface 21 of the cladding is planar, in a similar manner. In FIG. 2, this plane is indicated by a dotted line. In this case, the multicore fiber may be regarded as a planar lens, and the magnitude aD1 of the spherical aberration is smaller than the magnitude a1 of the spherical aberration in the case where the light is transmitted through the multicore fiber 1 according to the present embodiment as described above.

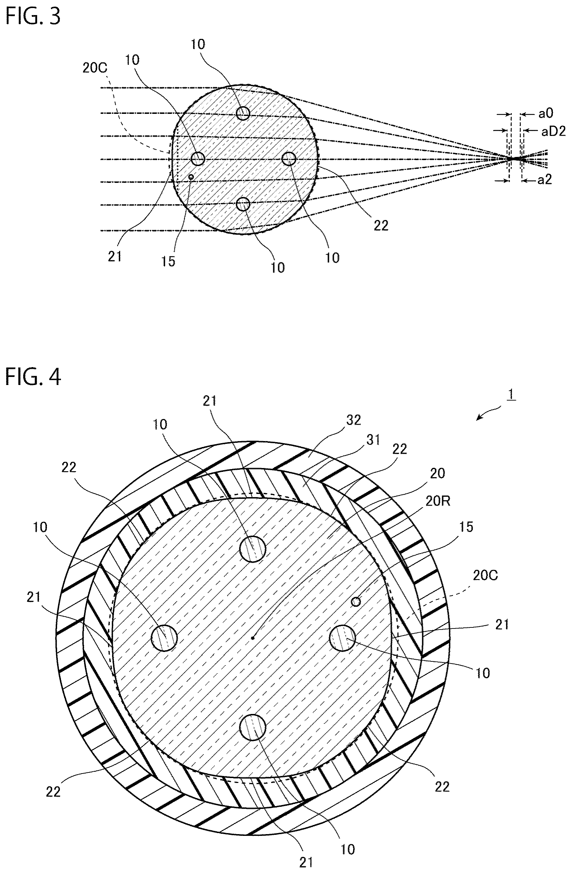

FIG. 3 is a diagram illustrating a spherical aberration in a case where light is made incident on the first outer circumferential surface 21 from the direction perpendicular to the longitudinal direction of the multicore fiber 1 and the light is emitted from the second outer circumferential surface 22. In this case, the multicore fiber 1 may be regarded as a biconvex lens close to a plano-convex lens as illustrated in FIG. 3, and the light emitted from the second outer circumferential surface 22 has a spherical aberration of a size a2. Note that the plano-convex lens is a lens in which a surface on which light is incident is formed in a planar shape and a surface from which the light is emitted is formed in a convex shape. The magnitude a2 of the spherical aberration is larger than the magnitude a1 of the spherical aberration described above. Furthermore, FIG. 3 illustrates the magnitude a0 of the spherical aberration in the case where similar light is transmitted through a multicore fiber including a circular cladding. In this case, the magnitude a2 of the spherical aberration tends to be larger than the magnitude a0 of the spherical aberration.

Furthermore, FIG. 3 illustrates magnitude aD2 of the spherical aberration in a case where light is transmitted through a multicore fiber including what is called a D-type cladding, in which a portion corresponding to the first outer circumferential surface 21 of the cladding is planar, in a similar manner. In FIG. 3, this plane is indicated by a dotted line. In this case, the multicore fiber may be regarded as a plano-convex lens, and the magnitude aD2 of the spherical aberration is larger than the magnitude a2 of the spherical aberration in the case where the light is transmitted through the multicore fiber 1 according to the present embodiment as described above.

From the descriptions of FIGS. 2 and 3, when light is transmitted through the multicore fiber 1 according to the present embodiment from a direction perpendicular to the longitudinal direction and the multicore fiber 1 is rotated, the amount of change in spherical aberration may be suppressed as compared with the multicore fiber including the D-type cladding.

Note that, as long as the curvature radius of the first outer circumferential surface 21 is larger than the curvature radius of the second outer circumferential surface 22, the first outer circumferential surface 21 may have a constant curvature radius overlapping a part of the circumference of a virtual circle (not illustrated), or may not have a constant curvature radius. For example, when the curvature radius of the first outer circumferential surface 21 is larger than the curvature radius of the second outer circumferential surface 22, the shape of the first outer circumferential surface 21 may be a part of an ellipse, or may be a part of a perfect circle.

As described above, in the multicore fiber 1 according to the present embodiment, the outer circumferential surface of the cladding 20 has the first outer circumferential surface 21, which is a part in the circumferential direction, and the second outer circumferential surface 22, which is another part in the circumferential direction, and the first outer circumferential surface 21 bulges outside the cladding 20 with a curvature radius larger than that of the second outer circumferential surface 22. Thus, even in a case where light is incident from the side of the first outer circumferential surface 21 at the time of performing the side-view alignment, the spherical aberration may be suppressed as compared with a case where light is incident from a planar portion of the outer circumferential surface of the D-type cladding, and the amount of change in spherical aberration may be suppressed as compared with the multicore fiber including the D-type cladding when the multicore fiber 1 is rotated. Therefore, according to the multicore fiber 1 according to the present embodiment, the alignment may be easily performed. In addition, since the shape of the outer circumferential surface of the cladding 20 is non-circular, rough alignment may be carried out on the basis of the outer shape of the cladding 20 before the side-view alignment is performed.

In addition, when the outer circumferential surface of the cladding 20 has a non-rotationally symmetric shape as in the multicore fiber 1 according to the present embodiment, one alignment position may be determined at the time of performing the rough alignment described above, whereby the alignment may be performed more easily.

Furthermore, in the multicore fiber 1 according to the present embodiment, the first outer circumferential surface 21 is a portion of the outer circumferential surface of the cladding 20 facing the core 10 disposed on the outer circumferential side. Thus, a distance between the first outer circumferential surface 21 and the core 10 facing the first outer circumferential surface 21 is smaller than a distance between the second outer circumferential surface 22 and the core 10 facing the second outer circumferential surface 22. Here, the shorter the distance between the outer circumferential surface of the core 10 and the outer circumferential surface of the cladding 20, the more likely a higher-order mode propagating through the core 10 is to propagate to the side of the cladding 20. Thus, light of the higher-order mode not required for communication or the like for propagating through the core 10 facing the first outer circumferential surface 21 may be attenuated by the influence of the first outer circumferential surface 21.

### (Second Embodiment)

Next, a second embodiment of the present invention will be described in detail with reference to FIG. 4. Note that the same or equivalent components as those of the first embodiment are denoted by the same reference signs, and redundant descriptions will be omitted unless otherwise specified.

As illustrated in FIG. 4, a multicore fiber 1 according to the present embodiment is different from the multicore fiber 1 according to the first embodiment in that each portion of an outer circumferential surface of a cladding 20 facing a core 10 serves as a first outer circumferential surface 21, and another portion of the outer circumferential surface of the cladding 20 serves as a second outer circumferential surface 22.

In the multicore fiber 1 according to the present embodiment, each portion of the outer circumferential surface of the cladding 20 facing the core 10 serves as the first outer circumferential surface 21, whereby unrequired light of a higher-order mode propagating each core 10 may be attenuated by the influence of the first outer circumferential surface 21 as compared with a multicore fiber including a circular cladding overlapping the second outer circumferential surface 22.

### (Third Embodiment)

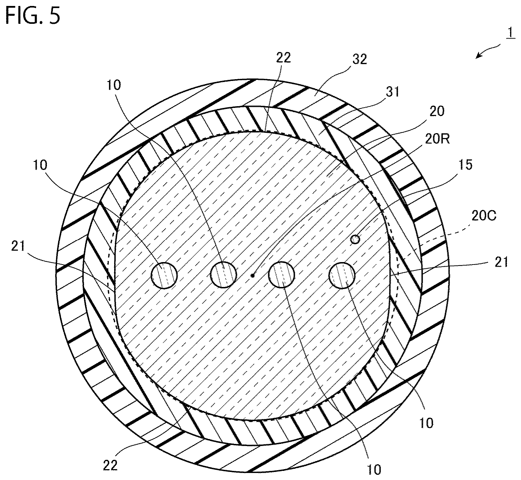

Next, a third embodiment of the present invention will be described in detail with reference to FIG. 5. Note that the same or equivalent components as those of the first embodiment are denoted by the same reference signs, and redundant descriptions will be omitted unless otherwise specified.

As illustrated in FIG. 5, a multicore fiber 1 according to the present embodiment is different from the multicore fiber 1 according to the first embodiment in that a plurality of cores 10 is linearly arranged.

In the present embodiment, the cores 10 located at both ends are cores arranged on the outer circumferential side of a cladding 20. Furthermore, in the present embodiment, each portion of the outer circumferential surface of the cladding 20 facing the cores 10 located at both ends serves as a first outer circumferential surface 21, and another portion of the outer circumferential surface of the cladding 20 serves as a second outer circumferential surface 22. Note that a shape of the outer circumferential surface of the cladding 20 may be similar to the shape of the outer circumferential surface of the cladding 20 according to the first embodiment. In this case, only one of the portions of the outer circumferential surface of the cladding 20 facing the cores 10 located at both ends serves as the first outer circumferential surface 21, and another portion of the outer circumferential surface of the cladding 20 serves as the second outer circumferential surface 22.

While the present invention has been described using the above embodiments as examples, the present invention is not limited thereto. For example, the first outer circumferential surface 21 may be provided on the outer circumferential surface of the cladding 20 other than portions facing the cores 10.

Furthermore, the first outer circumferential surface 21 may be provided at some portions of a plurality of portions of the outer circumferential surface of the cladding 20 facing the cores 10. The multicore fiber 1 according to the first embodiment is an example of this form. Furthermore, in the first embodiment, the first outer circumferential surface 21 may be provided at two or three of the four portions of the outer circumferential surface of the cladding 20 facing the cores 10. That is, some of the portions of the outer circumferential surface facing the cores 10 arranged on the outer circumferential side of the cladding 20 may serve as the first outer circumferential surface 21, and some other portions of the portions may serve as the second outer circumferential surface.

Furthermore, while all the cores 10 are located on the circumference centered on the reference position 20R in the first and second embodiments, another core may be arranged inside the circumference. For example, a core may be arranged on the reference position 20R.

Furthermore, in the embodiments described above, the exemplary case has been described in which the length of the straight line connecting both ends of the first outer circumferential surface 21 is equal to or longer than the diameter of the core 10 facing the first outer circumferential surface 21. However, the length of the straight line connecting both ends of the first outer circumferential surface 21 may be shorter than the diameter of the core 10. However, when the length of the straight line connecting both ends of the first outer circumferential surface 21 is equal to or longer than the diameter of the core 10 as in the embodiments described above, light of a higher-order mode not required for communication may be efficiently absorbed.

Furthermore, in embodiments described above, the core 10 facing the first outer circumferential surface 21 completely overlaps the first outer circumferential surface 21 when the first outer circumferential surface 21 is viewed along the direction perpendicular to the longitudinal direction of the multicore fiber 1. However, when viewed in a similar manner, a part of the core 10 facing the first outer circumferential surface 21 may overlap the first outer circumferential surface 21, and another part may not overlap the first outer circumferential surface 21. However, when the core 10 facing the first outer circumferential surface 21 completely overlaps the first outer circumferential surface 21, the light of the higher-order mode not required for the communication may be efficiently absorbed.

As described above, according to the present invention, a multicore fiber that may be easily aligned is provided, which may be used in the field of optical communication and other devices using multicore fibers.

## Claims

1. A multicore fiber comprising:
a plurality of cores and a cladding that surrounds the cores, wherein
an outer circumferential surface of the cladding includes a first outer circumferential surface that is a part in a circumferential direction and a second outer circumferential surface that is another part in the circumferential direction, and
the first outer circumferential surface bulges outside the cladding with a curvature radius larger than a curvature radius of the second outer circumferential surface.

2. The multicore fiber according to claim 1, wherein
two or more of the cores of the plurality of cores are arranged on an outer circumferential side of the cladding, and
at least one of portions of the outer circumferential surface facing the cores includes the first outer circumferential surface.

3. The multicore fiber according to claim 2, wherein
each of the portions includes the first outer circumferential surface.

4. The multicore fiber according to any one of claims 1 to 3, wherein
the outer circumferential surface of the cladding has a non-rotationally symmetric shape.

5. The multicore fiber according to any one of claims 1 to 4, wherein
the curvature radius of the first outer circumferential surface is 1.5 times or more and 20 times or less the curvature radius of the second outer circumferential surface.
